# EUROPEAN PATENT APPLICATION

(11) **EP 2 420 964 A2**
(43) Date of publication of application: **22.02.2012**
(21) Application number: 10777911.8
(22) Date of filing: 14.05.2010
(51) Int. Cl.: G06Q 30/00, G08G 1/123

(54) **METHOD AND APPARATUS FOR PROVIDING DYNAMIC ADVERTISEMENTS**

(30) Priority: 18.05.2009 KR 20090043217
(71) Applicant: Thinkwaresystems Corp, Seoul (KR)
(72) Inventor: PARK, Byungjoon, Seongnam-si Gyeonggi-do 463-010 (KR); LEE, Sangeun, Seoul 138-724 (KR); CHOI, Jinhwan, Incheon 405-241 (KR)
(74) Representative: Cabinet Plasseraud
(86) International application number: PCT/KR2010/003072
(87) International publication number: WO 2010/134724

(57) **Abstract**

A dynamic advertisement method and device for exposing an advertisement adjacent to real time dynamic information in which a user may have an interest are provided. The dynamic advertisement device includes: an advertisement unit for storing an advertisement; a communication unit for receiving a plurality of interest information using real time communication; a dynamic advertisement unit including at least one of a plurality of interest information and for generating a dynamic advertisement based on the included interest information; and a screen display unit for coupling the dynamic advertisement and the advertisement and displaying the coupled dynamic advertisement and advertisement in a preset advertisement area on a screen.

## Description

### [Technical Field]

The present invention relates to a dynamic advertisement method and device, and more particularly, to a dynamic advertisement method and device for increasing an advertisement exposure effect by providing in real time information in which a user may have an interest and exposing an advertisement adjacent to information in which the user may have an interest.

### [Background Art]

A conventional navigation terminal fixedly displays an advertisement in a portion on a screen or displays an advertisement in a building or an object displayed on a screen. In this case, the displayed advertisement is a stationary advertisement and always displays the same contents and thus users viewing an advertisement with an interest are few.

Therefore, by guiding the user to view an area in which an advertisement is displayed on a screen of the navigation terminal, a method and device that can increase an advertisement exposure effect are requested.

### [Disclosure]

### [Technical Problem]

An exemplary embodiment of the present invention provides a dynamic advertisement method and device that can expose an adjacent advertisement to a user when the user views information that may have an interest by providing in real time information in which the user may have an interest and exposing an advertisement adjacent to information in which the user may have an interest.

### [Technical Solution]

In an aspect, a dynamic advertisement device includes: an advertisement unit for storing an advertisement; a communication unit for receiving a plurality of interest information using real time communication; a dynamic advertisement unit for generating a dynamic advertisement based on the plurality of interest information; and a screen display unit for coupling the dynamic advertisement and the advertisement and displaying the coupled dynamic advertisement and advertisement in a preset advertisement area on a screen.

In another aspect, a dynamic advertisement method includes: receiving a plurality of interest information using real time communication; generating a dynamic advertisement based on at least one of the plurality of interest information; and coupling the dynamic advertisement and the advertisement and displaying the coupled dynamic advertisement and advertisement in a preset advertisement area on a screen.

### [Advantageous Effects]

According to the present invention, by providing in real time information in which a user may have an interest and exposing an advertisement adjacent to information that may have the interest, when the user views information that may have an interest, an adjacent advertisement can be exposed to the user.

### [Description of Drawings]

FIG 1 is a block diagram illustrating a configuration of a dynamic advertisement device according to an exemplary embodiment of the present invention;
FIG. 2 illustrates an example of a screen provided by a dynamic advertisement device according to an exemplary embodiment of the present invention;
FIG. 3 is a flowchart illustrating a dynamic advertisement method according to an exemplary embodiment of the present invention;
FIG. 4 illustrates an example of a screen in which a dynamic advertisement device according to an exemplary embodiment of the present invention displays a dynamic advertisement according to interest information;
FIG. 5 illustrates an example of a screen in which a dynamic advertisement device according to an exemplary embodiment of the present invention displays a dynamic advertisement according to sensor information; and
FIG. 6 illustrates an example of a screen in which a dynamic advertisement device according to an exemplary embodiment of the present invention displays a dynamic advertisement according to position information.

### [Best Mode]

Hereinafter, various exemplary embodiments according to the present invention will be described in detail with reference to the attached drawings.

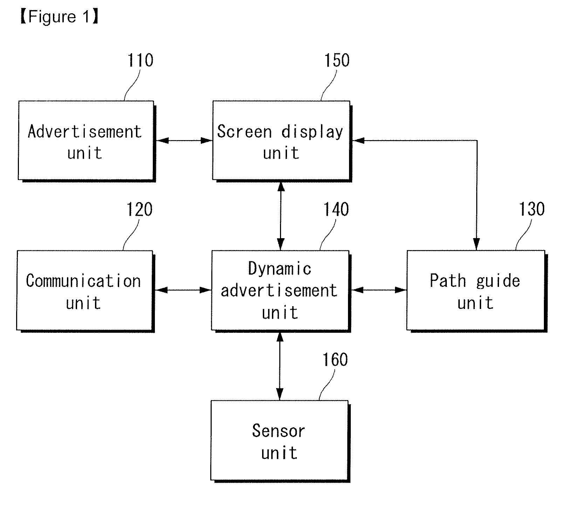

FIG 1 is a block diagram illustrating a configuration of a dynamic advertisement device according to an exemplary embodiment of the present invention.

As shown in FIG. 1, the dynamic advertisement device according to an exemplary embodiment of the present invention includes an advertisement unit 110, a communication unit 120, a path guide unit 130, a dynamic advertisement unit 140, a screen display unit 150, and a sensor unit 160.

The advertisement unit 110 stores advertisements provided by an advertiser.

The communication unit 120 receives a plurality of interest information using real time communication. In this case, the interest information may include at least one of real time news information and interest target information previously set by a user. The path guide unit 130 determines a position of a vehicle in which the dynamic advertisement device is installed, receives an input of a destination, and generates and guides a path between the destination and a position of the vehicle. In this case, the communication unit 120 transmits the position of the vehicle, the destination information, and the generated path input to the path guide unit 130 to a server, and may receive the interest information including at least one of information about peripheral topography of the vehicle, administrative district introduction information corresponding to the position of the vehicle, path guidance information, traffic information of the destination, weather information of the destination, weather or traffic situation information of a neighborhood region corresponding to the position of the vehicle, and event information of a neighborhood region corresponding to the position of the vehicle based on the position of the vehicle, the destination information, and the path from the server.

The dynamic advertisement unit 140 includes at least one of the plurality of interest information in which the communication unit 120 receives and generates a dynamic advertisement based on the included interest information. For example, when the communication unit 120 receives information in which a heavy snow warning is issued at the destination as weather information of the destination, the dynamic advertisement unit 140 may generate a dynamic advertisement including information in which a heavy snow warning is issued at the destination.

The screen display unit 150 couples the dynamic advertisement and the advertisement and displays the coupled advertisement in a preset advertisement area on the screen. In this case, the screen display unit 150 may couple and display the advertisement to each of both sides of the dynamic advertisement and may couple and display the one advertisement to one side of the dynamic advertisement.

Further, in the advertisement area, a size and form can be changed in a level unit of a map displayed on the screen and different dynamic advertisements and advertisements may be coupled and displayed on each advertisement area basis.

The sensor unit 160 detects a state or a peripheral situation of the vehicle and acquires sensor information. In this case, the sensor unit 160 may include at least one of an illumination sensor for detecting an illumination change at a periphery of the vehicle, an operation sensor including a terrestrial magnetism sensor and an acceleration sensor and for detecting a speed change of the vehicle, and an atmospheric pressure sensor for measuring an atmospheric pressure of a periphery of the vehicle and for detecting a height at which the vehicle is positioned.

In this case, the dynamic advertisement unit 140 includes at least one of a plurality of sensor information and generates a dynamic advertisement based on the included sensor information. For example, when the sensor unit 160 detects an overspeed exceeding a reference speed, the sensor unit 160 may generate a dynamic advertisement notifying the overspeed and a dynamic advertisement of contents to instruct deceleration and generate a dynamic advertisement guiding to turn on a headlight when the sensor unit 160 detects illumination less than or equal to predetermined illumination.

Specifically, the dynamic advertisement unit 140 determines whether information exceeding a preset critical value exists on each sensor information basis of the sensor information, and if information exceeding a preset critical value exists, the dynamic advertisement unit 140 generates a dynamic advertisement corresponding to the information. In this case, the critical value may be a reference value in which sensor information measured by each sensor may have an influence on a user. For example, a critical value of an illumination sensor may be a value in which a headlight is necessary when illumination is equal to or less than a critical value, and a critical value of an operation sensor may be a speed limit of a road according to a position of the vehicle or a maximum speed limit in all roads, and may be a reference value that may be determined as rapid acceleration when exceeding the speed limit. Further, if information exceeding the critical value does not exist in the sensor information, the dynamic advertisement unit 140 may generate the dynamic advertisement based on the position of the vehicle, the destination, and the path acquired in the path guide unit 130. In this case, the dynamic advertisement generated by the dynamic advertisement unit 140 may be a dynamic advertisement notifying topography characteristics like sharp curve segment guidance, wild animal protection segment guidance, sliding warning segment guidance, falling rock warning segment guidance, and fog warning segment guidance.

The dynamic advertisement unit 140 of the dynamic advertisement device according to an exemplary embodiment of the present invention generates the dynamic advertisement based on the interest information in which the communication unit 120 provides, the position information in which the path guide unit 130 provides, and the sensor information in which the sensor unit 160 provides.

In this case, the dynamic advertisement unit 140 sets different priority orders to the interest information, the position information, and the sensor information and generates the dynamic advertisement based on information having a high priority order when information having a high priority order is input.

For example, when the interest information is set as a first order, the sensor information is set as a second order, and the position information is set as a third order, the dynamic advertisement unit 140 may generate the dynamic advertisement according to the interest information while the interest information is being received in the communication unit 110. In this case, due to movement to a weak radio area or other reasons, when reception of the interest information is stopped, the dynamic advertisement unit 140 may generate the dynamic advertisement based on the sensor information, which is a second order. Further, when reception of the interest information is stopped and information exceeding a critical value to notify to a user does not exist in the sensor information, the dynamic advertisement unit 140 may generate the dynamic advertisement based on the position information, which is a third order.

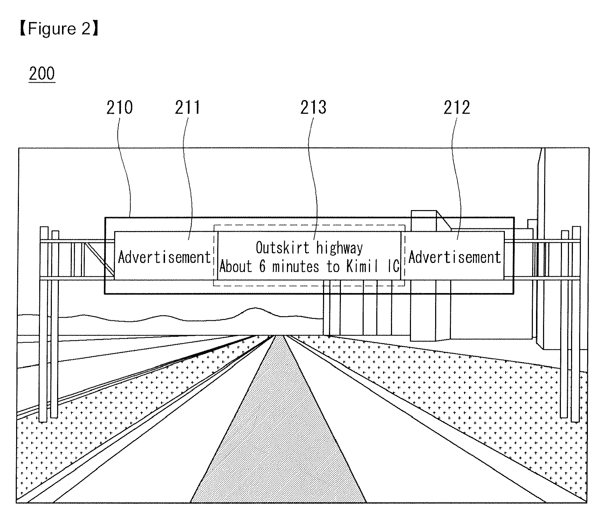

FIG. 2 illustrates an example of a screen provided by a dynamic advertisement device according to an exemplary embodiment of the present invention.

A screen 200 provided by the dynamic advertisement device according to an exemplary embodiment of the present invention may have at least one advertisement area 210 including advertisements 211 and 212 and a dynamic advertisement 213, as shown in FIG. 2.

In this case, the dynamic advertisement 213 guides a user's interest by providing traffic information, and when the user views the dynamic advertisement 213, the advertisement 211 and 212 of the left and right sides of the dynamic advertisement 213 are exposed to the user, as shown in FIG. 2.

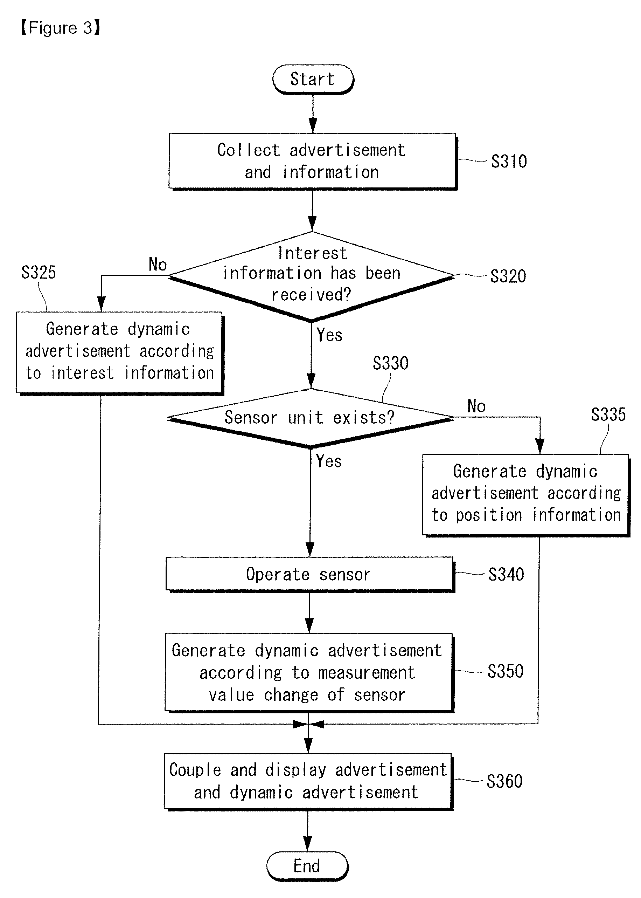

FIG. 3 is a flowchart illustrating a dynamic advertisement method according to an exemplary embodiment of the present invention.

The advertisement unit 110 receives and stores an advertisement from an advertiser (S310), and the communication unit 120 receives a plurality of interest information using real time communication. In this case, the path guide unit 130 receives an input of a destination from the user and generates a path and transmits position information, destination information, and path information of the vehicle to the dynamic advertisement unit 140.

Further, a dynamic advertisement device having no communication unit 120 may collect an advertisement with a separate configuration and store the advertisement at the advertisement unit 110.

The dynamic advertisement unit 140 determines whether the interest information received at step S310 has been continuously received in the communication unit 120 (S320).

If the interest information received at step S310 has not been continuously received in the communication unit 120, the dynamic advertisement unit 140 generates a dynamic advertisement appropriate for the user according to the interest information received at step S310 (S325).

Specifically, the dynamic advertisement unit 140 includes at least one of the plurality of interest information received at step S31 0 and generates a dynamic advertisement based on the included interest information.

If the interest information received at step S310 has been continuously received in the communication unit 120, the dynamic advertisement unit 140 determines whether the sensor unit 160 exists (S330).

If the sensor unit 160 does not exist, the dynamic advertisement unit 140 generates the dynamic advertisement based on the position of the vehicle, the destination, and the path acquired by the path guide unit 130 at step S31 0 (S335).

The sensor unit 160 detects a state or a peripheral situation of the vehicle and acquires sensor information (S340).

The dynamic advertisement unit 140 includes at least one of a plurality of sensor information acquired at step S340 and generates a dynamic advertisement based on the included sensor information (S350). Specifically, the dynamic advertisement unit 140 determines whether information exceeding a preset critical value exists on each sensor information basis of the sensor information acquired at step S340, and if information exceeding a preset critical value exists, the dynamic advertisement unit 140 generates a dynamic advertisement corresponding to the information.

The screen display unit 150 couples the advertisement stored at step S310 and the dynamic advertisement generated at step S325, step S335, or step S350 and displays the coupled advertisement and dynamic advertisement in a preset advertisement area on a screen (S360).

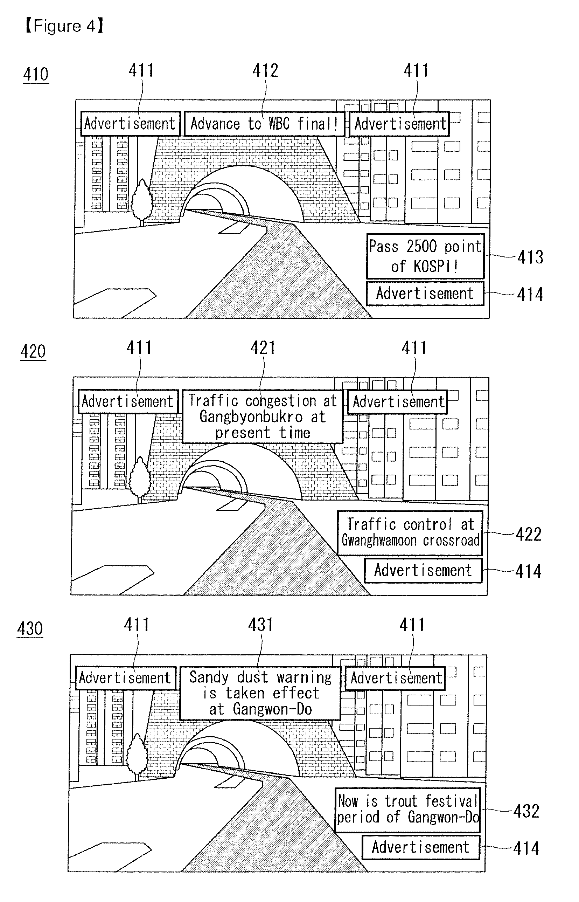

FIG. 4 illustrates an example of a screen in which a dynamic advertisement device according to an exemplary embodiment of the present invention displays a dynamic advertisement according to interest information.

When the dynamic advertisement unit 140 is set to select the interest information including real time news information, the screen display unit 150 of the dynamic advertisement device according to an exemplary embodiment of the present invention displays a screen 410 in which two advertisements 411 are coupled to both sides of a dynamic advertisement 412 that displays real time news and in which another advertisement 414 is coupled to one side of a dynamic advertisement 413 that displays another real time news, as shown in FIG. 4.

Further, when the dynamic advertisement unit 140 is set to select the interest information including traffic situation information, the screen display unit 150 displays a screen 420 in which two advertisements 411 are coupled to both sides of a dynamic advertisement 421 notifying traffic information and in which another advertisement 414 is coupled to one side of a dynamic advertisement 422 notifying another traffic information.

When the dynamic advertisement unit 140 is set to select the interest information including destination information, the screen display unit 150 may display a screen 430 in which two advertisements 411 are coupled to both sides of a dynamic advertisement 431 notifying weather information of the destination and in which another advertisement 414 is coupled to one side of a dynamic advertisement 442 notifying event information of the destination.

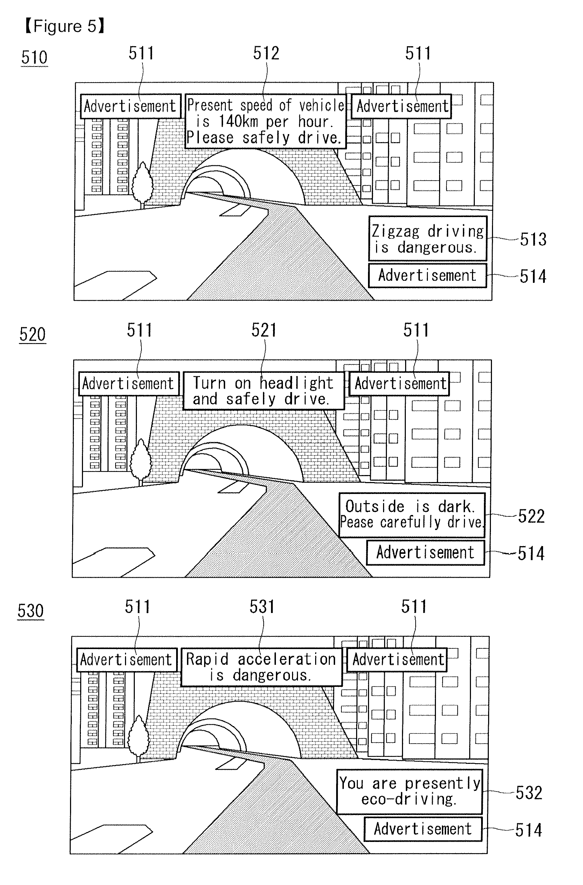

FIG. 5 illustrates an example of a screen in which a dynamic advertisement device according to an exemplary embodiment of the present invention displays a dynamic advertisement according to sensor information.

When the operation sensor of the sensor unit 160 acquires sensor information in which a speed of a vehicle is 140km, the dynamic advertisement unit 140 of the dynamic advertisement device according to an exemplary embodiment of the present invention generates dynamic information 512 notifying that the speed of a vehicle is an overspeed and requiring deceleration because the speed of a vehicle is a speed exceeding a critical value, which is a speed limit of a road and dynamic information 513 warning a danger according to an overspeed, and the screen display unit 150 displays a screen 510 in which two advertisements 511 are coupled to both sides of the dynamic information 513 requiring the deceleration and in which another advertisement 514 is coupled to one side of the dynamic information 513 warning the danger, as shown in FIG. 5.

Further, when an illumination sensor of the sensor unit 160 measures illumination equal to or less than a critical value, it means that a peripheral environment is dark and thus the dynamic advertisement unit 140 generates dynamic information 521 requiring to turn on a headlight and dynamic information 522 warning danger according to darkness, and the screen display unit 150 displays a screen 520 in which two advertisements 511 are coupled to both sides of the dynamic information 521 requiring to turn on the headlight and in which another advertisement 514 is coupled to one side of the dynamic information 522 warning the danger.

When the operation sensor of the sensor unit 160 measures that a speed of the vehicle accelerates equal to or faster than a critical value, the vehicle performs rapid acceleration and thus the dynamic advertisement unit 140 generates warning dynamic information 531 notifying rapid acceleration and dynamic information 532 notifying that which drive is being performed, and the screen display unit 150 may display a screen 530 in which two advertisements 511 are coupled to both sides of the warning dynamic information 531 and in which another advertisement 514 is coupled to one side of the dynamic information 532 notifying that the vehicle is driving.

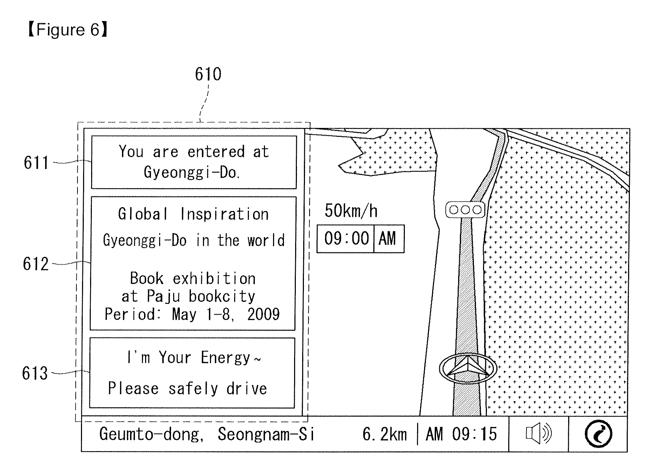

FIG. 6 illustrates an example of a screen in which a dynamic advertisement device according to an exemplary embodiment of the present invention displays a dynamic advertisement according to position information.

When the path guide unit 130 detects that a vehicle having the dynamic advertisement device is moved to another administrative district, the screen display unit 150 of the dynamic advertisement device according to an exemplary embodiment of the present invention displays a screen 610 in which a message 611 notifying a change of an administrative district and in which dynamic information 612 and an advertisement 613 notifying event information at a moved administrative district are coupled.

In this way, a dynamic advertisement device and method according to an exemplary embodiment of the present invention provides in real time information in which a user may have an interest, exposes an advertisement adjacent to information in which the user may have an interest, and thus an adjacent advertisement can be exposed to the user when the user views information that may have an interest.

Exemplary embodiments according to the present invention may be embodied in a program command form that can be performed through various computer means and be recorded in a computer readable medium. The computer readable medium may include individually or in combination a program command, file data, and a data structure. The program command recorded in the medium is specially designed and formed for the present invention or may be already known to and used for a person of ordinary skill in the computer software art. An example of the computer readable record medium includes magnetic media such as a hard disk, a floppy disk, and a magnetic tape, optical media such as a CD-ROM and a DVD, magneto-optical media such as a floptical disk, and a hardware device specially formed to store and perform a program command, such as a ROM, a RAM, and a flash memory. An example of the program command includes a high level language code that can be executed by a computer using an interpreter as well as a machine language code made by a compiler. In order to perform operation of the present invention, the hardware device may be formed to operate as at least one software module and vice versa. Although implementations have been described with reference to a number of illustrative implementations thereof, it should be understood that numerous other modifications and implementations can be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

### [Industrial Applicability]

According to the present invention, by providing in real time information in which a user may have an interest and exposing an advertisement adjacent to information that may have the interest, when the user views information that may have an interest, a dynamic advertisement method and device that can expose an adjacent advertisement to the user are provided.

## Claims

1. A dynamic advertisement device comprising:
an advertisement unit for storing an advertisement;
a communication unit for receiving a plurality of interest information using real time communication;
a dynamic advertisement unit for generating a dynamic advertisement based on at least one of the plurality of interest information; and
a screen display unit for coupling the dynamic advertisement and the advertisement and displaying the coupled dynamic advertisement and advertisement in a preset advertisement area on a screen.

2. The dynamic advertisement device of claim 1, wherein the interest information comprises at least one of real time news information and interest target information previously set by a user.

3. The dynamic advertisement device of claim 1, further comprising a path guide unit for determining a position of a vehicle, receiving an input of a destination, and generating and guiding a path between the destination and the position of the vehicle, wherein the communication unit transmits the position of the vehicle and the destination information input to the path guide unit, and the path generated by the path guide unit to a server and receives interest information generated based on the position of the vehicle, the destination information, and the path from the server.

4. The dynamic advertisement device of claim 3, wherein the interest information generated based on the path comprises at least one of information about peripheral topography of the vehicle, introduction information of an administrative district corresponding to the position of the vehicle, path guidance information, traffic information and weather information of the destination, weather or traffic situation information of a neighboring region corresponding to the position of the vehicle, and event information of a neighboring region corresponding to the position of the vehicle.

5. The dynamic advertisement device of claim 1, wherein the screen display unit couples the advertisement to each of both sides of the dynamic advertisement and displays the coupled dynamic advertisement and advertisement.

6. The dynamic advertisement device of claim 1, wherein the screen display unit couples the one advertisement to one side of the dynamic advertisement and displays the coupled advertisement.

7. A dynamic advertisement device comprising:
an advertisement unit for storing an advertisement;
a sensor unit for detecting a state or a peripheral situation of a vehicle and acquiring sensor information;
a dynamic advertisement unit for generating a dynamic advertisement based on at least one of the sensor information; and
a screen display unit for coupling the dynamic advertisement and the advertisement and displaying the coupled dynamic advertisement and advertisement in a preset advertisement area on a screen.

8. The dynamic advertisement device of claim 7, wherein the sensor unit comprises at least one of:
an illumination sensor for detecting an illumination change at a periphery of the vehicle;
an operation sensor comprising a terrestrial magnetism sensor and an acceleration sensor and for detecting a speed change of the vehicle; and
an atmospheric pressure sensor for detecting a height in which the vehicle is positioned by measuring an atmospheric pressure of a periphery of the vehicle.

9. The dynamic advertisement device of claim 8, wherein the dynamic advertisement unit determines whether information exceeding a preset critical value on each sensor information basis exists in the sensor information, and generates, if information exceeding a preset critical value on each sensor information basis exists in the sensor information, a dynamic advertisement corresponding to the information.

10. The dynamic advertisement device of claim 9, further comprising a path guide unit for determining a position of the vehicle, receiving an input of the destination, and generating and guiding a path between the destination and the position of the vehicle, wherein the dynamic advertisement unit generates a dynamic advertisement based on the position of the vehicle, the destination, and the path, if information exceeding the critical value does not exist in the sensor information.

11. A dynamic advertisement method comprising:
receiving a plurality of interest information using real time communication;
generating a dynamic advertisement based on at least one of the plurality of interest information; and
coupling the dynamic advertisement and the advertisement and displaying the coupled dynamic advertisement and advertisement in a preset advertisement area on a screen.

12. The dynamic advertisement method of claim 11, wherein the interest information comprises at least one of real time news information, interest subject information previously set by a user, information about peripheral topography of a vehicle based on a position of the vehicle and destination information, introduction information of an administrative district corresponding to the position of the vehicle, path guidance information, traffic information and weather information of the destination, weather or traffic situation information of a neighboring region corresponding to the position of the vehicle, and event information of a neighboring region corresponding to the position of the vehicle.

13. The dynamic advertisement method of claim 11, further comprising:
acquiring sensor information by sensing a state or a peripheral situation of a vehicle; and
determining whether the interest information is received in real time,
wherein the generating of a dynamic advertisement comprises generating, if the interest information is not received in real time, a dynamic advertisement based on at least one of the sensor information.

14. The dynamic advertisement method of claim 13, wherein the acquiring of sensor information comprises at least one of:
acquiring illumination sensor information by detecting an illumination change of a periphery of the vehicle with an illumination sensor;
acquiring operation sensor information by detecting a speed change of the vehicle with a terrestrial magnetism sensor and an acceleration sensor; and
acquiring height sensor information at which the vehicle is positioned by measuring an atmospheric pressure of a periphery of the vehicle.

15. The dynamic advertisement method of claim 13, wherein the generating of a dynamic advertisement comprises determining whether information exceeding a preset critical value on each sensor information basis exists in the sensor information, and generating, if information exceeding a preset critical value on each sensor information basis exists in the sensor information, a dynamic advertisement corresponding to the information.

16. The dynamic advertisement method of claim 15, further comprising determining a position of the vehicle, receiving an input of the destination, and generating and guiding a path between the destination and the position of the vehicle,
wherein the generating of a dynamic advertisement comprises generating, if information exceeding a preset critical value on each sensor information basis does not exist in the sensor information, a dynamic advertisement based on the position of the vehicle, the destination, and the path.

17. The dynamic advertisement method of claim 11, wherein the displaying of the coupled dynamic advertisement and advertisement in a preset advertisement area comprises coupling and displaying the advertisement to each of both sides of the dynamic advertisement.

18. The dynamic advertisement method of claim 11, wherein the displaying of the coupled dynamic advertisement and advertisement in a preset advertisement area comprises coupling and displaying the one advertisement to one side of the dynamic advertisement.

19. A computer readable recording medium on which a program for executing the method cited in any one of claims 11 to 18 is recorded.
